# EUROPÄISCHE PATENTSCHRIFT

(11) **EP 1 792 805 B1**
(45) Veröffentlichungstag und Bekanntmachung des Hinweises auf die Patenterteilung: **09.07.2008**
(21) Anmeldenummer: 06020921.0
(22) Anmeldetag: 05.10.2006
(51) Int. Cl.: B62D 7/02

(54) **Antriebs-und Lenkeinheit für ein Rad eines Flurförderzeugs**
Drive and steering unit for a conveyor vehicle
Unité de propulsion et de direction pour un chariot de élévateur

(30) Priorität: 30.11.2005 DE 102005058400
(43) Veröffentlichungstag der Anmeldung: 06.06.2007
(73) Patentinhaber: Jungheinrich Aktiengesellschaft, 22047 Hamburg (DE)
(72) Erfinder: Mänken, Frank, Dr.-Ing., 24558 Henstedt-Ulzburg (DE); Schipper, Ulf, Dipl.-Ing., 22848 Norderstedt (DE); von Werder, Martin, Dipl.-Ing., 22949 Ammersbek (DE); Wrede, Rudolf, Dipl.-Ing., 22844 Norderstedt (DE)
(74) Vertreter: Hauck Patent- und Rechtsanwälte

(56) Entgegenhaltungen:
- WO-A-20/05043720
- WO-A-20/05077695
- DE-A1- 10 148 457
- DE-A1- 19 949 351
- DE-A1-2102004 006 72
- DE-U1-1202005 020 62
- JP-A- 9 030 434
- JP-A- 11 027 903
- US-B1- 6 175 171
- US-B1- 6 548 981

## Beschreibung

Die Erfindung bezieht sich auf eine Antriebs- und Lenkeinheit für ein Rad eines Flurförderzeugs nach dem Oberbegriff des Patentanspruchs 1.

Eine Antriebs- und Lenkeinheit der eingangs genannten Art ist aus DE 199 49 351 A1 bekannt geworden. Ein Drehschemel für das angetriebene und gelenkte Rad weist eine Gabel auf, die eine horizontale Welle für das Rad lagert. Antriebsmotor und Lenkmotor sind koaxial übereinander angeordnet. Zwischen Antriebsmotor und Lenkmotor ist ein erstes Getriebe angeordnet, das über eine Welle auf ein Kegelgetriebe wirkt zum Antrieb der Radwelle. Die Welle erstreckt sich durch eine Hohlwelle des Lenkmotor hindurch. Die Hohlwelle wirkt über ein Lenkgetriebe auf den Lenkschemel, um diesen um den gewünschten Lenkwinkel zu verdrehen nach Maßgabe eines Signals eines Lenkwinkelgebers.

Üblich ist auch, die Verstellung des Drehschemels über einen seitlich angeordneten Lenkmotor mit zum Fahrmotor paralleler Achse. Die Kraftübertragung findet über ein in das Motorgehäuse integriertes Planetengetriebe, eine Kette oder eine Direktverzahnung statt. Im Fahrmotor befinden sich in der Regel Sensoren zur Temperatur- und auch Drehzahlmessung, die über einen Sensorstecker mit der externen Steuerung verbunden sind. Die Motorphasen werden über ein Klemmbrett an die Steuerung angeschlossen.

Aus DE 102 27 725 A1 ist bekannt, die elektronische Steuerung für einen Fahrmotor und/oder Lenkmotor radial an dem Motorgehäuse anzubringen.

Die WO 2005/077 695 A1 offenbart eine Antriebs- und Lenkeinheit gemäß dem Oberbegriff des Anspruchs 1.

Der Erfindung liegt die Aufgabe zugrunde, eine kompakt bauende Antriebs- und Lenkeinheit für ein Rad eines Flurförderzeugs zu schaffen, die eine Vormontage ermöglicht und in herkömmliche Konstruktionen eingebaut werden kann.

Diese Aufgabe wird durch die Merkmale des Patentanspruchs 1 gelöst.

Bei der erfindungsgemäßen Einheit ist die elektronische Steuerung auf mindestens einer Leiterplatte untergebracht, die koaxial zwischen Fahrmotor und Lenkmotor und/oder Lenkmotor und Lenkgetriebe angeordnet ist.

Vorteilhaft bei der Erfindung ist ein sehr geringer Platzbedarf für die Antriebs- und Lenkeinheit aufgrund der hohen Integrationsdichte der einzelnen Bauteile. Außerdem wird dadurch auf einfache Weise eine Vormontage in einzelnen Baugruppen und der Einheit realisierbar.

Nach einer Ausgestaltung der Erfindung ist vorgesehen, daß die Leiterplatte annähernd mittig ein Loch aufweist, durch das eine oder beide Wellen hindurchgeführt sind. Auf diese Weise kann die gesamte Querschnittsfläche des Motorgehäuses für die Leiterplatte und die entsprechende Anbringung von elektronischen Komponenten genutzt werden.

Vorzugsweise ist nach einer Ausgestaltung der Erfindung das Motorgehäuse rohrförmig, und die Leiterplatte ist als kreisförmige Lochscheibe ausgebildet.

Bei der erfindungsgemäßen Antriebs- und Lenkeinheit kann das Motorgehäuse als Kühlkörper für die auf der Leiterplatte angebrachten Komponenten dienen. Nach einer Ausgestaltung der Erfindung kann zusätzlich oder alternativ zur Lüftung auf einer oder beiden Wellen ein Lüfterrad für die Kühlung der auf der Leiterplatte angeordneten elektronischen Komponenten sitzen. Es versteht sich, daß auch ein fremdangetriebener Lüfter zu Kühlzwecken eingesetzt werden kann.

Nach einer weiteren Ausgestaltung der Erfindung weist das gemeinsame Gehäuse für Fahr- und Lenkmotor einen seitlichen Steckanschluß auf für die Spannungsversorgung der Motoren sowie Eingänge für das Soll-DrehzahlSignal für den Fahrmotor und das Soll-Winkel-Signal für den Lenkmotor. Der Steckanschluß ist vorzugsweise unmittelbar an der Leiterplatte angebracht.

Es wurde eingangs bereits erwähnt, daß Fahr- und Lenkmotor in der Regel Sensoren aufweisen zur Bestimmung der Ist-Drehzahl bzw. des Ist-Lenkwinkels. Nach einer Ausgestaltung der Erfindung ist ein Sensor zur Bestimmung der Motortemperatur und/oder ein Sensor für die Drehzahl des Fahrmotors und/oder ein Sensor für die Drehlage des Lenkmotors auf der Leiterplatte angeordnet. Die Drehzahl- bzw. die Winkelsensoren können nach einer weiteren Ausgestaltung der Erfindung unmittelbar mit der zugeordneten Welle des entsprechenden Motors zusammenwirken.

Vorzugsweise sind für die elektronische Steuerung beider Motoren aus Sicherheitsgründen redundant geschaltete Mikroprozessoren vorgesehen.

Es sind nach der Erfindung zwei koaxiale Leiterplatten vorgesehen, von denen die eine die Steuerung für den Fahrmotor und die andere für den Lenkmotor enthält. Die Prozessoren der beiden Leiterplatten können jedoch redundant ausgeführt, d.h. jeweils für beide Steuerungen programmiert sein. Die Signale der Sensoren werden daher auf beide Prozessoren geschaltet. Dies zum einen wegen der Redundanz und zum anderen wegen möglicher Abhängigkeit der Funktionen der beiden Motoren. So wird z.B. die Lenkwinkelgeschwindigkeit des Lenkmotors von der Fahrgeschwindigkeit abhängig gemacht. Auch kann der maximale Lenkwinkel durch eine vorgegebene Fahrgeschwindigkeit begrenzt sein. Umgekehrt kann die Fahrgeschwindigkeit durch den Lenkwinkel begrenzt sein. Auch die Übersetzung des Lenkwinkels zwischen Lenkwinkelgeber und gelenktem Rad kann in Abhängigkeit von der Fahrgeschwindigkeit geändert werden.

Bei der Erfindungsgemäßen Verwendung von zwei Leiterplatten sind diese entweder unmittelbar übereinander angeordnet, wobei sie zwischen Fahrmotor und Lenkmotor angeordnet sind, oder es sind jeweils eine Leiterplatte zwischen Fahrmotor und Lenkmotor und eine zweite Leiterplatte zwischen Lenkmotor und Lenkgetriebe anzuordnen. Letzteres ist z. B. ein sogenanntes Exzenter- oder Cyclo-Getriebe.

Es ist auch bekannt, Fahrmotoren für Antriebs- und Lenkeinheiten für ein Rad eines Flurförderzeugs mit einer Bremse auszustatten. Nach einer Ausgestaltung der Erfindung liegt eine Bremseinheit am oberen Ende des Fahrmotors, wobei die Bremssignale ebenfalls über den Steckanschluß übertragen werden können.

Die Erfindung wird nachfolgend anhand von Ausführungsbeispielen näher erläutert.
- Fig. 1: zeigt schematisch die Seitenansicht einer ersten Ausführungsform einer Antriebs- und Lenkeinheit nach der Erfindung.
- Fig. 2: zeigt eine andere Ausführungsform einer Antriebs- und Lenkeinheit nach der Erfindung in gleicher Ansicht wie Fig. 1.
- Fig. 3: zeigt in Draufsicht zwei Leiterplatten für die Antriebs- und Lenkeinheit nach den Fign. 1 und 2.
- Fig. 4: zeigt eine mögliche Funktionsverteilung auf den Leiterplatten nach Fig. 3.
- Fig. 5: zeigt ein Blockschaltbild der Leiterplatten nach Fign. 3 und 4.

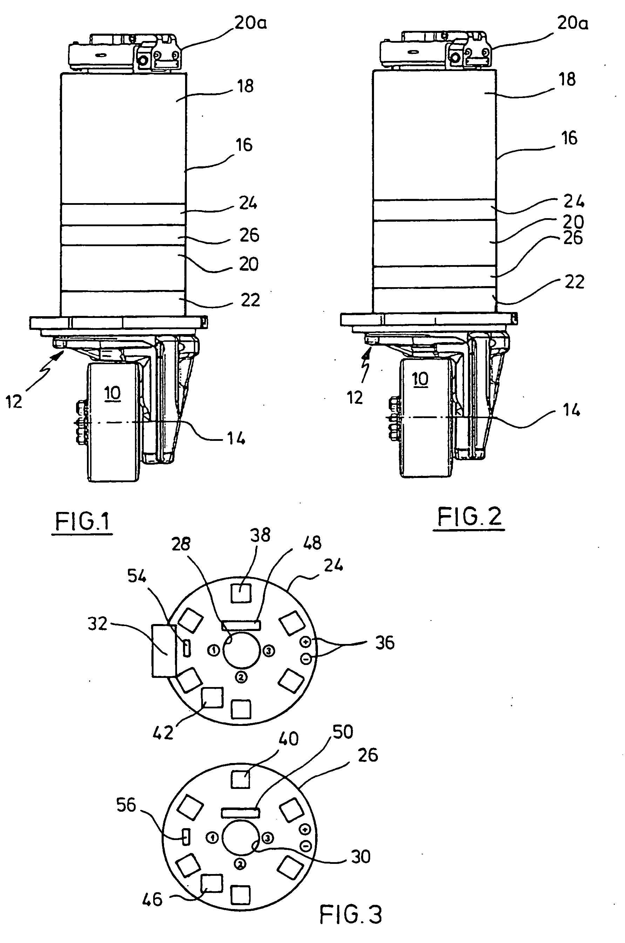

In den Fign. 1 und 2 ist ein angetriebenes und gelenktes Rad 10 eines nicht dargestellten Flurförderzeugs zu erkennen, das in einem Drehschemel 12 gelagert ist. Am Drehschemel 12 ist ein Getriebe 14 gehalten, über das die nicht gezeigte horizontale Welle des Rades 10 angetrieben ist (Kegelradgetriebe). Der Drehschemel 12 ist um eine vertikale Achse im Rahmen des nicht gezeigten Flurförderzeugs drehbar gelagert. Auf dem Drehschemel 12 sitzt ein rohrförmiges Gehäuse 16, in dem ein Fahrmotor 18 und ein Lenkmotor 20 untergebracht sind. Der Fahrmotor 18 besitzt eine Welle (nicht gezeigt), die sich durch den Lenkmotor 20 hindurch zum Getriebe 14 erstreckt. Der Lenkmotor 20 hat eine Hohlwelle, die mit dem Drehschemel 12 gekoppelt und durch welche sich die Welle des Fahrmotors hindurcherstreckt. Eine derartige koaxiale Anordnung der Motoren 18, 20 und der nicht gezeigten Wellen ist etwa in DE 199 49 351 A1 offenbart. Auf dem Gehäuse 16 oberhalb des Fahrmotors 18 ist eine elektromagnetische Bremse 20a angeordnet. Der Lenkmotor 20 wirkt mit seiner Hohlwelle über ein Exzentergetriebe 22 auf den Drehschemel 12. In Fig. 1 sind zwischen dem Fahrmotor und dem Lenkmotor 20 zwei koaxiale Leiterplatten 24, 26 im Gehäuse 16 angeordnet. Bei der Ausführungsform nach Fig. 2 ist die Leiterplatte 24 allein zwischen Fahrmotor 18 und Lenkmotor 20 angeordnet, während die Leiterplatte 26 zwischen Lenkmotor und Lenkgetriebe 22 angeordnet ist.

In Fig. 3 sind die Leiterplatten 24, 26 schematisch dargestellt. Der Träger der Leiterplatte 24, 26 ist kreisförmig und an den Innendurchmesser des Gehäuses 16 angepaßt. Mittig ist ein Kreisloch 28 bzw. 30 vorgesehen, durch welches sich die Welle des Fahrmotors 18 bzw. beide Wellen von Fahrmotor 18 und Lenkmotor 20 hindurcherstrecken. Die Leiterplatte 24 weist einen Steckanschluß 32 auf, der über das Gehäuse 16 und eine entsprechende Öffnung erreichbar ist (nicht gezeigt). Über den Steckanschluß 32 erfolgt die Versorgung der Motoren 18 und 20 mit Spannung. Ferner sind Sollwertgeber für Fahren und Lenken sowie ein Bremssignalgeber mit dem Steckanschluß 32 über einen Stecker verbindbar. An den Klemmen 36 erfolgt die Versorgung mit Batteriespannung, die in Drehstrom für die Drehstrommotoren umgewandelt werden muß. Zu diesem Zweck weist jede Leiterplatte 24, 26 sechs Leistungstransistoren 38 bzw. 40 auf, die gleichmäßig verteilt auf der Leiterplatte 24, 26 untergebracht sind. An den Punkten 1, 2 und 3 der Leiterplatte 24 bzw. 26 sind die Leitungen für die Motoren 18 bzw. 20 angeschlossen. Auf jeder Leiterplatte 24, 26 befindet sich auch ein Mikroprozessor 42 bzw. 46 sowie ein Sensor 48 für die Drehzahlmessung des Fahrmotors 18 und ein Sensor 50 für die Drehzahlmessung des Lenkmotors 20. Ein weiterer Sensor 54 mißt die Temperatur des Fahrmotors 18 und ein Sensor 56 auf der Leiterplatte 26 die Temperatur des Lenkmotors 20. Die Mikroprozessoren 42 und 46 sind redundant ausgeführt, d.h. sie dienen zur Steuerung der Motoren 18, 20 gleichermaßen, so daß auch die Signale der Sensoren 48, 50, 54 und 56 auf beide Prozessoren gegeben werden. Die Sensoren 48, 50 können so ausgeführt sein, daß sie mit der zugeordneten Welle zusammenwirken, also z.B. als Hallsensoren ausgeführt sind.

Natürlich ist auch denkbar, einen Teil der elektronischen Steuerung von einem oder beiden Motoren außen am Motorgehäuse anzuordnen, z. B. an Kühlrippen des Gehäuses.

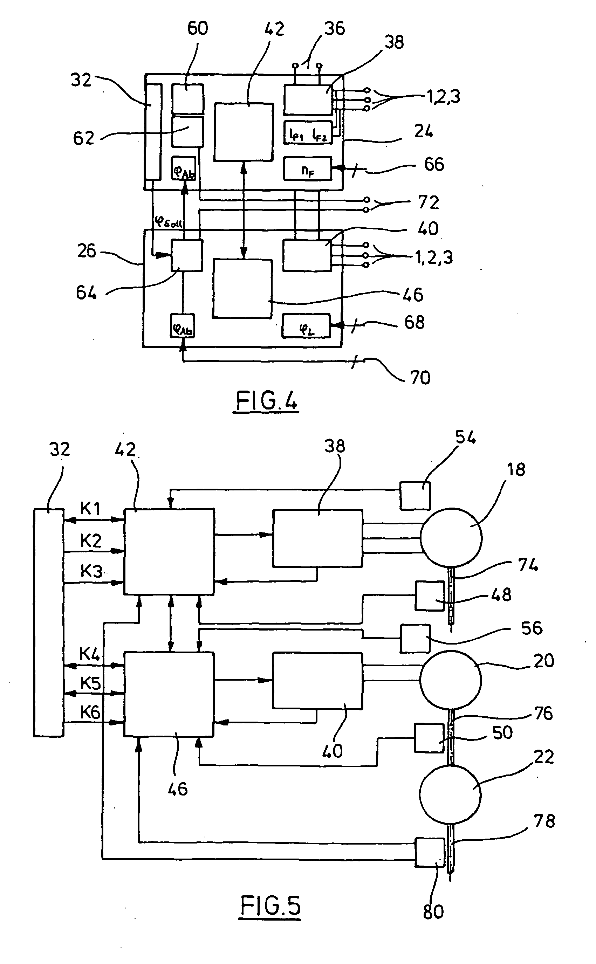

In Fig. 4 ist die Funktionsverteilung auf den Leiterplatten 24, 26 als Beispiel angedeutet. Bei 60 ist ein CAN-Bus angedeutet und bei 62 eine In-Out-Stufe, wobei bei 64 eine weitere In-Out-Stufe vorgesehen ist. Die Zuführung der Signale von den in Fig. 4 nicht gezeigten Sensoren ist bei 66 für den Drehzahlsensor gezeigt, bei 68 für den Drehwinkel des Rotors des Lenkmotors 20 und bei 70 für den Winkel, den der Drehschemel 12 gegenüber dem Rahmen einnimmt. Die Drehzahl ist mit n_{F} und der erste Drehwinkel mit ϕ_{L} und der zweite Drehwinkel ϕ_{Ab} bezeichnet. Der Soll-Lenkwinkel *ϕ*_{Soll} wird über den Steckanschluß 32 eingegeben, wie beschrieben. Wie ferner bereits ausgeführt, gelangt auch das Bremssignal für die Bremse 20a über den Steckanschluß 32 auf diese. Der Ausgang der Leiterplatten 24, 26 für die Bremse 20a ist mit 72 bezeichnet.

In dem Blockschaltbild nach Fig. 5 sind noch einmal die Motoren 18, 20 sowie das Lenkgetriebe 22 dargestellt. Außerdem ist die Welle 74 des Fahrmotors 18 und die Hohlwelle 76 des Lenkmotors 20 zu erkennen sowie die Abtriebswelle 78 des Lenkgetriebes 22. Man erkennt, daß die Sensoren 48 bzw. 50 jeweils einer Motorwelle zugeordnet sind. Ein weiterer Sensor ist der Abtriebswelle 78 zugeordnet und dient zur Bestimmung des eigentlichen Lenkwinkels, d.h. des Winkels zwischen Antriebsrad 10 und dem Rahmen. Dieser Sensor ist mit 80 bezeichnet.

Die Übertragungskanäle K1 bis K6 bedeuten:
- K1: CAN-Bus
- K2: Sollwert Fahrgeschwindigkeit
- K3: Sollwert Lenkwinkel
- K4: CAN-Bus
- K5: sonstige Ein- und Ausgänge
- K6: Lenkwinkel (redundant zu K3)

## Patentansprüche

1. Antriebs- und Lenkeinheit für ein Rad eines Flurförderzeugs, bei der ein Fahrmotor (18) und ein Lenkmotor (20) koaxial untereinander angeordnet und jeweils über ein Fahrgetriebe bzw. Lenkgetriebe (22) mit einer Welle des Rades bzw. einer Lageranordnung des Rades gekoppelt sind, wobei eine Welle als Hohlwelle ausgebildet ist und die andere Welle durch die Hohlwelle hindurcherstreckt ist, mit einer elektronischen Steuerung für den Fahr- und Lenkmotor, die mit Sollwertgebern für die Drehzahl und den Lenkwinkel verbunden ist, **dadurch gekennzeichnet, dass** die elektronische Steuerung (2) zwei Leiterplatten (24, 26) aufweist, die koaxial zu Fahrmotor (18) und Lenkmotor (20) angeordnet sind, wobei die eine Leiterplatte (24) die Steuerung für den Fahrmotor (18) und die andere Leiterplatte (26) die Steuerung für den Lenkmotor (20) enthält und wobei entweder beide Leiterplatten (24, 26) unmittelbar übereinander zwischen Fahrmotor (18) und Lenkmotor (20) oder die eine Leiterplatte (24) zwischen Fahrmotor (18) und Lenkmotor (20) und die andere Leiterplatte (26) zwischen Lenkmotor (20) und Lenkgetriebe (22) angeordnet sind.

2. Antriebs- und Lenkeinheit nach Anspruch 1, **dadurch gekennzeichnet, daß** die Leiterplatte (24, 26) annähernd mittig ein Loch (28, 30) aufweist, durch das eine der Wellen (74, 76) oder beide hindurchgeführt ist bzw. sind.

3. Antriebs- und Lenkeinheit nach Anspruch 1 oder 2, **dadurch gekennzeichnet, daß** ein rohrförmiges Gehäuse (16) für beide Motoren (18, 20) vorgesehen ist und die Leiterplatte (24, 26) als kreisförmige Lochscheibe ausgebildet ist.

4. Antriebs- und Lenkeinheit nach einem der Ansprüche 1 bis 3,**dadurch gekennzeichnet, daß** auf einer der beiden Wellen ein Lüfterrad für die Kühlung von auf der Leiterplatte (24, 26) angebrachter elektronischer Komponenten sitzt.

5. Antriebs- und Lenkeinheit nach einem der Ansprüche 1 bis 4, **dadurch gekennzeichnet, daß** das Gehäuse Kühlrippen aufweist für eine passive Kühlung.

6. Antriebs- und Lenkeinheit nach einem der Ansprüche 1 bis 5, **dadurch gekennzeichnet, daß** ein gemeinsames Gehäuse (16) für Fahr- und Lenkmotor (18, 20) einen seitlichen Steckanschluß aufweist für die Spannungsversorgung der Motoren (18, 20) sowie Eingänge für das Soll-Drehzahl-Signal für den Fahrmotor (18) und das Soll-Lenk-Signal für den Lenkmotor (20).

7. Antriebs- und Lenkeinheit nach einem der Ansprüche 1 bis 6, **dadurch gekennzeichnet, daß** ein Sensor (54, 56) zur Bestimmung der Motortemperatur und/oder ein Sensor (48) für die Drehzahl des Fahrmotors (18) und/oder ein Sensor (50) für die Drehlage des Rotors des Lenkmotors (20) auf der Leiterplatte (24, 26) angeordnet ist.

8. Antriebs- und Lenkeinheit nach einem der Ansprüche 1 bis 7, **dadurch gekennzeichnet, daß** zwei redundant geschaltete Mikroprozessoren (42, 46) für die elektronische Steuerung vorgesehen sind.

9. Antriebs- und Lenkeinheit nach Anspruch 1, **dadurch gekennzeichnet, daß** beide Leiterplatten (24 ,26) als Paket zwischen Fahrmotor (18) und Lenkmotor (20) angeordnet sind.

10. Antriebs- und Lenkeinheit nach einem der Ansprüche 5 bis 9, **dadurch gekennzeichnet, daß** am oberen Ende des Fahrmotors (18) eine Bremse (20a) angeordnet ist, und der Steckanschluß (32) auch einen Eingang für das Bremssignal aufweist.

11. Antriebs- und Lenkeinheit nach einem der Ansprüche 7 bis 10, **dadurch gekennzeichnet, daß** die Sensoren (48, 50, 80) mit einer Welle des Fahrmotors (18), einer Welle des Lenkmotors (20) bzw. einer Welle des Lenkgetriebes (22) zusammenwirken.

## Claims

1. Drive and steering unit for a wheel of a floor conveyor, in which a driving motor and a steering motor are disposed coaxially one below the other and are each one coupled via a drive gear or a steering gear, respectively, with a shaft of the wheel or the bearing equipment of the wheel, respectively, wherein one shaft is a hollow shaft and the other shaft extends through the hollow shaft, with an electronic control for the driving motor and the steering motor, which is connected with desired value transmitters for the rotational speed and the steering angle, **characterised in that** the electronic control has two circuit boards (24, 26) which are coaxially arranged to the driving motor (18) and the steering motor (20), whereas the first circuit board (24) contains the control for the driving motor (18) and the second circuit board (26) contains the control for the steering motor (20) and whereas either both circuit boards (24, 26) are arranged immediately on top of each other between the driving motor (18) and the steering motor (20) or the first circuit board (24) is arranged between the driving motor (18) and the steering motor (20) and the second circuit board (26) is arranged between the steering motor (20) and the steering gear (22)..

2. Drive and steering unit according to claim 1, **characterised in that** the circuit board (24, 26) has a hole (28, 30) approximately in its centre, through which one of the shafts (74, 76) or both is or are guided through, respectively.

3. Drive and steering unit according to claim 1 or 2, **characterised in that** one pipe-shaped casing (16) for both motors (18, 20) is provided and the circuit board (24, 26) is realised as a circular perforated disc.

4. Drive and steering unit according to any one of claims 1 to 3, **characterised in that** a fan propeller for cooling electronic components which are fixed on the circuit board (24, 26) sits on one of the two shafts.

5. Drive and steering unit according to any one of claims 1 to 4, **characterised in that** the casing is provided with cooling ribs for a passive cooling.

6. Drive and steering unit according to any one of claims 1 to 5, **characterised in that** a common casing (16) for the driving and the steering motor (18, 20) has a lateral plug-in connection for the power supply of the motors (18, 20) as well as inputs for the desired rotational speed value signal for the driving motor (18) and the desired steering signal for the steering motor (20).

7. Drive and steering unit according to any one of claims 1 to 6, **characterised in that** a sensor (54, 56) for the detection of the motor temperature and/or a sensor (48) for the rotational speed of the driving motor (18) and/or a sensor (50) for the rotational position of the rotor of the steering motor (20) is arranged on the circuit board (24, 26).

8. Drive and steering unit according to any one of claims 1 to 7, **characterised in that** two redundantly connected microprocessors (42, 46) are provided for the electronic control.

9. Drive and steering unit according to claim 1, **characterised in that** both coaxial circuit boards (24, 26) are arranged as a packet between the driving motor (18) and the steering motor (20).

10. Drive and steering unit according to any one of claims 5 to 9, **characterised in that** a brake (20a) is arranged on the upper end of the driving motor (18), and the plug-in connection (32) has also an input for the brake signal.

11. Drive and steering unit according to any one of claims 7 to 10, **characterised in that** the sensors (48, 50, 80) co-operate with a shaft of the driving motor (18), a shaft of the steering motor (20) and a shaft of the steering gear (22), respectively.

## Revendications

1. Unité de propulsion et de direction pour une roue d'un chariot élévateur, dans laquelle un moteur de traction (18) et un moteur de direction (20) sont disposés de manière coaxiale l'un par rapport à l'autre et couplés respectivement par une boîte de traction ou une boîte de direction (22) respectivement à un arbre de la roue ou à un arrangement de palier de la roue, un arbre étant constitué en tant qu'arbre creux, et l'autre arbre étant étendu à travers l'arbre creux, avec une commande électronique pour le moteur de traction et de direction, qui est connectée à des générateurs de valeurs de consigne pour le régime et l'angle de direction, **caractérisée en ce que** la commande électronique (2) présente deux circuits imprimés (24, 26) qui sont disposés de manière coaxiale par rapport au moteur de traction (18) et au moteur de direction (20), l'un des circuits imprimés (24) comprenant la commande pour le moteur de traction (18) et l'autre circuit imprimé (26) la commande pour le moteur de direction (20) et dans laquelle soit les deux circuits imprimés (24, 26) sont disposés directement l'un au-dessus de l'autre entre le moteur de traction (18) et le moteur de direction (20), soit l'un des circuits imprimés (24) est disposé entre le moteur de traction (18) et le moteur de direction (20) et l'autre circuit imprimé (26) entre le moteur de direction (20) et la boîte de direction (22).

2. Unité de propulsion et de direction selon la revendication 1, **caractérisée en ce que** le circuit imprimé (24, 26) présente approximativement en son milieu un trou (28, 30) à travers lequel l'un des arbres (74, 76) ou les deux est/sont passé(s).

3. Unité de propulsion et de direction selon la revendication 1 ou 2, **caractérisée en ce qu'**un boîtier tubulaire (16) est prévu pour les deux moteurs (18, 20) et le circuit imprimé (24, 26) est constitué en tant que disque perforé circulaire.

4. Unité de propulsion et de direction selon l'une des revendications 1 à 3, **caractérisée en ce qu'**une roue de ventilateur est placée sur l'un des deux arbres pour le refroidissement de composants électroniques montés sur le circuit imprimé (24, 26).

5. Unité de propulsion et de direction selon l'une des revendications 1 à 4, **caractérisée en ce que** le boîtier présente des ailettes de refroidissement pour un refroidissement passif.

6. Unité de propulsion et de direction selon l'une des revendications 1 à 5, **caractérisée en ce qu'**un boîtier commun (16) pour le moteur de traction et de direction (18, 20) présente un raccordement à fiches latéral pour l'alimentation en courant des moteurs (18, 20) ainsi que des entrées pour le signal de régime de consigne pour le moteur de traction (18) et le signal de direction de consigne pour le moteur de direction (20).

7. Unité de propulsion et de direction selon l'une des revendications 1 à 6, **caractérisée en ce qu'**un capteur (54, 56) pour la détermination de la température de moteur et/ou un capteur (48) pour le régime du moteur de traction (18) et/ou un capteur (50) pour la position de rotation du rotor du moteur de direction (20) est disposé sur le circuit imprimé (24, 26).

8. Unité de propulsion et de direction selon l'une des revendications 1 à 7, **caractérisée en ce que** deux microprocesseurs (42, 46) en connexion redondante sont prévus pour la commande électronique.

9. Unité de propulsion et de direction selon la revendication 1, **caractérisée en ce que** les deux circuits imprimés (24, 26) sont disposés en tant que paquet entre le moteur de traction (18) et le moteur de direction (20).

10. Unité de propulsion et de direction selon l'une des revendications 5 à 9, **caractérisée en ce qu'**un frein (20a) est disposé à l'extrémité supérieure du moteur de traction (18) et le raccordement à fiches (32) présente également une entrée pour le signal de freinage.

11. Unité de propulsion et de direction selon l'une des revendications 7 à 10, **caractérisée en ce que** les capteurs (48, 50, 80) coopèrent avec un arbre du moteur de traction (18), un arbre du moteur de direction (20) et/ou un arbre de la boîte de direction (22).
